# FASCICULE DE BREVET EUROPEEN

(11) **EP 0 681 549 B1**
(45) Date de publication et mention de la délivrance du brevet: **09.10.1996**
(21) Numéro de dépôt: 94905763.2
(22) Date de dépôt: 31.01.1994
(51) Int. Cl.: B65G 1/137, G06K 7/00

(54) **SYSTEME D'IDENTIFICATION DE RECHERCHE ET DE SIGNALISATION D'OBJETS**
SYSTEM ZUR SUCHE, IDENTIFIKATION UND ANZEIGE VON GEGENSTÄNDEN
SYSTEM FOR IDENTIFYING, SEARCHING FOR AND LOCATING OBJECTS

(30) Priorité: 03.02.1993 FR 9301160
(43) Date de publication de la demande: 15.11.1995
(73) Titulaire: Treillet, Jacques, F-27370 La Saussaye (FR)
(72) Inventeur: Treillet, Jacques, F-27370 La Saussaye (FR)
(74) Mandataire: Robert, Jean-Pierre
(86) Numéro de dépôt international: FR9400118
(87) Numéro de publication internationale: WO9418100

(56) Documents cités:
- EP-A- 0 203 687
- DE-A- 3 047 322
- DE-U- 9 206 737
- FR-A- 2 548 803
- FR-A- 2 592 012
- FR-A- 2 667 183
- GB-A- 2 152 335
- PATENT ABSTRACTS OF JAPAN vol. 8, no. 237 (P-310) (1674) 30 Octobre 1984 & JP,A,59 112 376 (KONPIYUUTAA SERVICE) 28 Juin 1984
- PATENT ABSTRACTS OF JAPAN vol. 10, no. 206 (P-478) (2262) 18 Juillet 1986 & JP,A,61 048 081 (FUJITSU) 8 Mars 1986
- PATENT ABSTRACTS OF JAPAN vol. 10, no. 360 (M-541) (2417) 3 Décembre 1986 & JP,A,61 155 104 (TOSHIBA) 14 Juillet 1986

## Description

La présente invention concerne un dispositif permettant de répertorier et classer des documents ou des objets et de rechercher ces documents dans l'espace où ils sont disposés de manière aléatoire.

Il existe de nombreuses méthodes pour classer des documents de manière à, bien entendu, les retrouver. La plupart de ces méthodes consiste à affecter un code au document à classer qui correspond à un dossier, lequel dossier est lui-même disposé dans un espace de rangement pouvant comporter un repère ordonné fixe, correspondant à une organisation définie des codes les uns par rapport aux autres et par rapport au signe du repère fixe. La connaissance de la règle présidant à cette organisation permet d'accéder au dossier dont on connaît le code, ce dernier étant porté d'une manière visible sur le dossier. La remise en place du dossier doit également satisfaire à la règle d'organisation du classement, sans quoi le dossier sera égaré et ne sera retrouvé qu'au prix d'une recherche systématique, longue, coûteuse et fastidieuse si le nombre des dossiers est important. Ceci vaut également pour des objets de toute nature, dans un espace de stockage par exemple, les dossiers étant remplacés par des contenants (bacs, corbeilles, récipients, ....).

Dans le cas d'un classement ou rangement manuel, l'organisation des dossiers (des contenants) dans l'espace est identifiable visuellement, ce qui permet l'accès direct au dossier recherché. Il existe des systèmes de classement ou d'archivage automatiques qui mettent en oeuvre des automates (par exemple des transtockeurs) qui, en fonction du code du dossier (contenant), procèdent à sa recherche et à sa manutention entre l'endroit de son stockage et celui de sa consultation ou prise en main par le demandeur. On connaît également un dispositif de recherche qui comporte, entre une console informatique d'interrogation et les rayonnages, une liaison câblée qui permet l'excitation de voyants lumineux de repérage de la portion de rayonnage dans laquelle le dossier ou contenant recherché se trouve, en réponse à une interrogation sur la console.

Ce genre de classement qui, d'une manière ou d'une autre, implique une organisation déterminée de l'espace, est source de nombreuses erreurs qui peuvent conduire à la perte de documents ou d'objets parfois importants. Il implique également dans certains cas, de devoir estimer la partie de l'espace occupé par chaque dossier ou contenant pour utiliser au mieux l'espace de rangement disponible. Or cette estimation est par définition approximative et conduit généralement à prévoir plus de place que nécessaire, donc à une médiocre utilisation de l'espace.

Il est connu, notamment par le document FR-A-2 592 012, un dispositif de classement et de recherche d'objets, comportant une pluralité de contenants destinés chacun à accueillir des objets ayant une parenté, et un support de contenant, avec pour chaque contenant des moyens pour recevoir un module d'identification du contenant. Ce module est pourvu d'un capteur de signaux radio et d'un émetteur sonore et/ou lumineux, activé en réponse à la réception par le capteur d'un signal de recherche codé correspondant au code de référence du module.

Parce que ce module émetteur d'un signal de présence en réponse à un signal de recherche est solidaire de chaque contenant, le classement devient beaucoup plus simple. En effet, il n'y a plus de nécessité de respecter une correspondance stricte entre un contenant et une portion de l'espace défini pour le recevoir. Il s'ensuit une très grande simplification de la manutention des contenants, une grande souplesse et une optimisation de l'utilisation de l'espace et une suppression des causes de perte d'un contenant par erreur de classement.

Cette solution présente cependant plusieurs inconvénients. D'abord les signaux radio sont sensibles à l'environnement et à la présence de pièces métalliques. Pour diminuer cette sensibilité, il conviendrait d'opérer en basse fréquence ce qui implique l'utilisation de grandes antennes, ce qui est incompatible avec la taille des modules dans le domaine d'application envisagé. En outre ce document est muet quant à l'énergie nécessaire au fonctionnement du module.

On a proposé dans un document FR-A-2 548 803, de fournir l'énergie à l'électronique "embarquée" dans une étiquette, au moyen de cellules photo-voltaïques. Il faut cependant soumettre ces cellules à un éclairement violent pour obtenir l'énergie suffisante au fonctionnement du récepteur. En outre, cette source d'énergie implique l'utilisation de mémoires non volatiles, inscriptibles dans le circuit électronique qui relèvent d'une technologie coûteuse.

La présente invention entend proposer un système d'identification et de signalisation en réponse à une instruction de recherche de documents ou d'objets, qui permette de conserver les avantages d'un classement aléatoire dans un espace donné tout en étant d'un coût acceptable par le marché.

A cet effet, l'invention a donc pour objet un système d'identification, de recherche et de signalisation d'objets, lorsqu'ils sont disposés de manière aléatoire dans un espace de rangement, en réponse à un signal de recherche, ce système étant composé de moyens d'étiquetage associés à chaque objet et d'un moyen d'interrogation à distance d'au moins l'un de ces moyens d'étiquetage, chaque moyen d'étiquetage comportant un capteur de signaux infra-rouges, un circuit logique de comparaison du signal capté et d'un signal de référence stocké dans une mémoire, délivrant en sortie un signal de commande d'un émetteur lumineux lorsque l'identité du signal reçu et du signal de référence est établi.

Selon l'invention le moyen d'étiquetage comporte deux sources séparées d'alimentation en énergie, l'une constituée par une batterie d'accumulation destinée à l'alimentation d'une partie du circuit comportant la mémoire, le comparateur et l'émetteur lumineux, l'autre constituée par au moins une cellule photo-voltaïque d'alimentation d'un étage d'amplification du signal issu du capteur des infra-rouges.

Cette double alimentation présente l'avantage d'une consommation d'énergie minimale pour la batterie, donc d'une durée de vie longue pour le moyen d'étiquetage, qui est compatible avec la durée de vie d'un dispositif d'étiquetage classique (de l'ordre de quelques années). On a constaté que cette compatibilité de durée de vie existe même dans le cas où la ou les mémoires du circuit logique sont de type mémoire vive (RAM) ou volatile c'est-à-dire demandant une alimentation permanente pour conserver l'information enregistrée. La principale conséquence de cette disposition réside dans la possibilité d'utiliser une technologie peu coûteuse par rapport à une technologie mettant en oeuvre les mémoires mortes électriquement programmables et/ou reprogrammables.

Dans une application de l'invention aux dispositifs d'étiquetage de dossiers suspendus par exemple, l'ensemble du circuit électronique, l'émetteur, le capteur et la cellule du moyen d'étiquetage sont portés par une carte dont la largeur est de l'ordre de 10 mm. C'est en effet la largeur communément rencontrée dans le domaine des étiquettes pour dossiers suspendus ou analogues. Pour d'autres objets, par exemple des classeurs à levier ou boîtes d'archives, les dimensions de "l'étiquette" pourront être différentes car la surface offerte pour leur support sera différente.

Le moyen d'interrogation du système selon l'invention comporte une boîtier pourvu d'un clavier de composition d'un code et de sélection d'au moins deux modes de fonctionnement, un circuit électronique dont une entrée est le clavier et qui possède au moins un premier émetteur de signaux infra-rouges de recherche et un second émetteur de signaux infra-rouges de personnalisation de chaque moyen d'étiquetage. De manière préférée, cet émetteur de personnalisation est situé à proximité d'un logement du moyen d'étiquetage ménagé dans le boîtier en regard du récepteur que comporte ce moyen lorsqu'il est logé dans le boîtier. En outre, l'émetteur de signal lumineux du moyen d'étiquetage est situé sur son support à un endroit maintenu à l'extérieur du boîtier lorsqu'il est placé dans le logement, afin de constituer un témoin de la validation de la personnalisation.

Enfin, dans le système selon l'invention, le boîtier peut comporter au voisinage du logement du moyen d'étiquetage une source d'éclairement pour les cellules photo-voltaïques, cette source pouvant être réduite à une fenêtre laissant passer la lumière du jour ou la lumière artificielle de la pièce, ou peut comporter un contact électrique d'alimentation d'au moins l'amplificateur de signal infra-rouge situé dans le circuit électronique du moyen d'étiquetage, ce contact électrique étant susceptible d'être porté au contact d'un plot appartenant à ce moyen d'étiquetage lorsque ce dernier est glissé dans le logement du boîtier.

D'autres avantages et caractéristiques de l'invention ressortiront de la description d'un mode de sa réalisation donnée ci-après à titre d'exemple.

Il sera fait référence aux dessins annexés dans lesquels :
- la figure 1 illustre par un schéma l'ensemble des moyens mis en oeuvre dans l'invention,
- la figure 2 est une vue de face du moyen d'étiquetage électronique,
- la figure 3 est un schéma de principe du circuit fonctionnel de ce moyen d'étiquetage,
- la figure 4 et la figure 5 illustrent deux modes de réalisation du moyen d'interrogation mis en oeuvre dans le système selon l'invention.

L'exemple représenté aux figures concerne des documents mais l'invention n'est pas limitée à ce type d'objets et peut trouver application à tout objet susceptible d'être stocké, déstocké, grâce à des contenants appropriés.

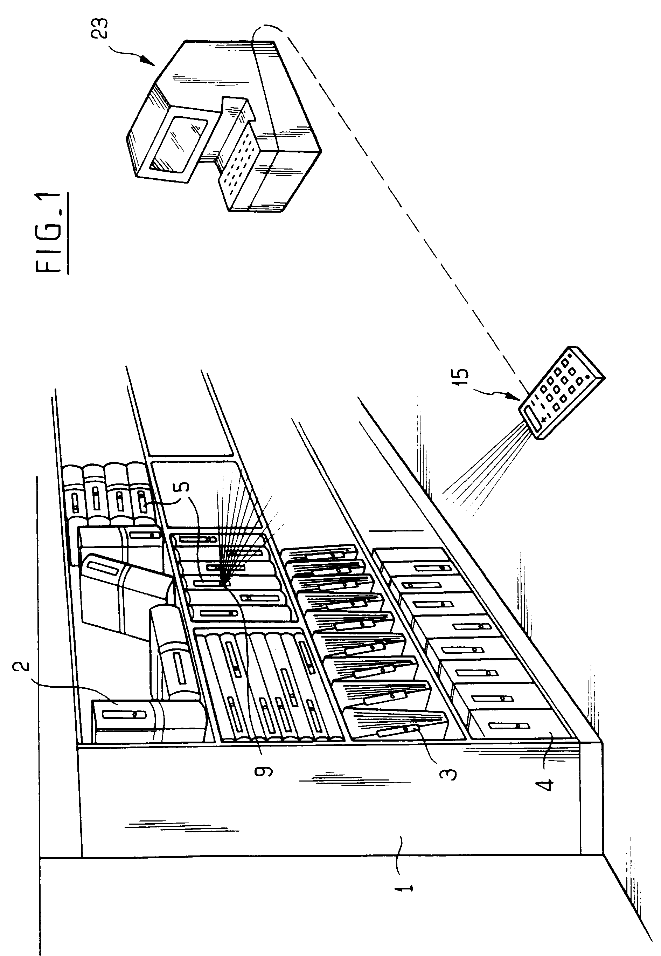

On a représenté à la figure 1 un rayonnage 1 sur lequel des dossiers sont disposés, ces dossiers pouvant être de n'importe quelle nature : dossier à sangle 2, dossier suspendu 3, ou boîte d'archivage 4.... Chacun de ces dossiers porte une étiquette 5 pour son repérage et son identification. Les dimensions de cette étiquette sont de l'ordre de celles des étiquettes habituellement utilisées avec les dossiers suspendus.

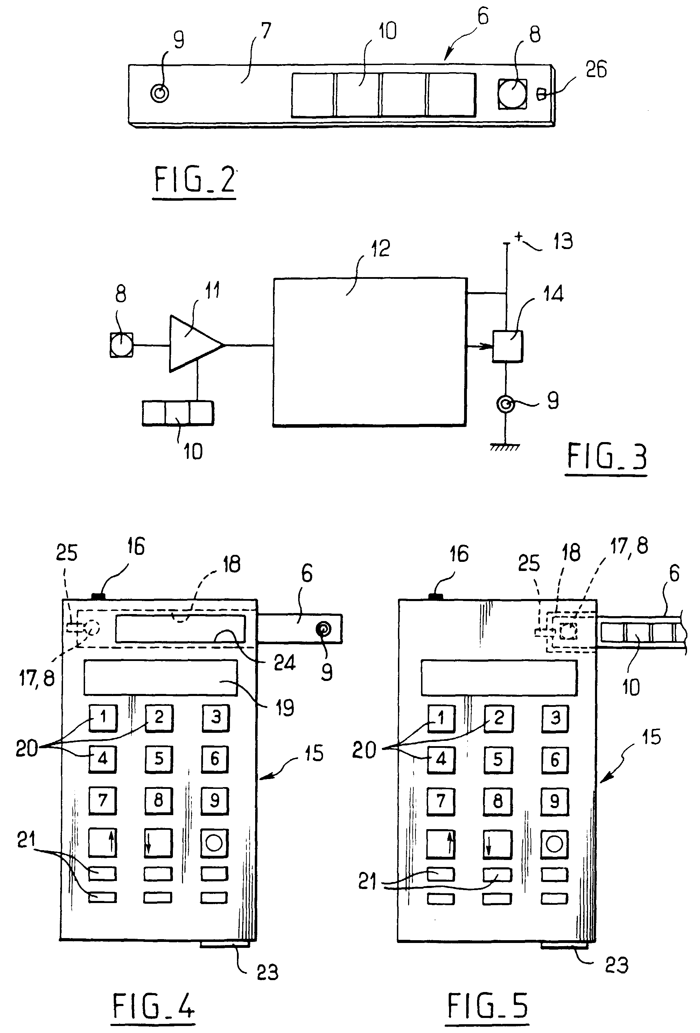

Chaque étiquette 5, comme représenté à la figure 2, est constituée par un boîtier en matière plastique plat allongé 6 qui renferme une carte électronique dont une face, celle visible sur la figure 2, porte un capteur 8 de rayonnement infra-rouge, un émetteur lumineux 9 tel qu'une diode et une batterie 10 de cellules photo-voltaïques. A l'arrière de cette carte, sont disposés tous les organes électroniques assurant le fonctionnement de l'étiquette comme cela sera expliqué ci-après. Les dimensions de ce moyen d'étiquetage sont telles qu'elles sont semblables à celles d'une étiquette couramment employée pour des dossiers suspendus, c'est-à-dire de l'ordre de 10 mm de largeur pour 100 à 150 mm de longueur.

A la figure 3 et très schématiquement représenté, le circuit électronique comporte, connecté en sortie du capteur 8, un amplificateur 11 du signal reçu alimenté en énergie par la batterie 10 de cellules photo-voltaïques. Le signal amplifié est conduit dans une logique électronique 12 (par exemple un asic) qui est alimenté par une connexion permanente à une source d'énergie 13 qui peut être constituée par une pile électrique. Cette pile assure également l'alimentation de l'émetteur luminescent (diode 9) lorsque la connexion de la diode 9 à la source 13 est autorisée par le circuit logique 12. On a schématisé en 14 le moyen assurant cette connexion qui peut être de toute forme appropriée et connue ; il peut même être un oscillateur engendrant une fréquence d'excitation de la diode 9.

Sans entrer dans le détail, la logique électronique ou l'asic 12 comporte un circuit intégré figeant un certain nombre de pas de programme ainsi que dans un certain mode de réalisation, un oscillateur des mémoires, des registres, des compteurs-décompteurs, décodeurs.... permettant d'effectuer avec des comparateurs des opérations logiques habituelles.

Dans un mode de réalisation de l'invention, les fonctions assurées par ce bloc de logique électronique sont les suivantes :

Au moment de la mise en place de la batterie ou de la pile 13 et de sa connexion au circuit électronique, il est procédé à un conditionnement de ce circuit c'est-à-dire que par l'intermédiaire du capteur 8, on transmet à ce circuit un signal codé qui place toute la logique dans une position d'attente pour recevoir dans un registre approprié, le signe d'identification qui va distinguer et personnaliser l'étiquette (par exemple un mot de 36 bits). Le moyen d'étiquetage est alors prêt à être mis sur le marché.

Chez l'utilisateur, il est personnalisé par le signal codé qui lui est transmis au moyen du récepteur 8 et stocké dans le registre approprié, lequel registre étant ensuite verrouillé lorsque la transmission est validée. Le bloc logique est alors placé dans son dernier état qui est un état d'utilisation dans lequel le programme consiste à réaliser une comparaison des signaux codés que recevra le récepteur 8 avec celui de référence contenu dans le registre verrouillé. Lorsque l'identité sera constatée, l'excitation de la diode luminescente 9 sera commandée, ce qui permettra de repérer dans l'espace de stockage l'objet ou le dossier recherché.

On notera que, après le conditionnement du circuit électronique suivant la mise en place de la pile, le circuit est en état de veille. Chaque signal infra-rouge reçu est précédé d'une salve d'oscillations qui, amplifiées par l'amplificateur 11, constitue l'énergie initiale permettant de réveiller, par exemple en chargeant une capacité, l'oscillateur que comporte le circuit électronique 12. L'entretien du fonctionnement de cet oscillateur est assuré, dans le cas de la personnalisation jusqu'à la validation de l'opération et dans le cas de l'utilisation du moyen d'étiquetage, jusqu'à soit la mise en fonction de la diode luminescente 9 soit la constatation de l'absence d'identité entre le signal reçu et le signal de référence.

Si la logique comprend des mémoires volatiles (RAM) c'est la pile 13 qui fournit l'énergie nécessaire à leur entretien. La consommation maximum de courant dans cet état de veille de l'électronique est de l'ordre de 20 micro-ampères. A chaque signal reçu, en utilisation, pendant le temps où l'oscillateur est réveillé, la consommation maximale de l'électronique est de l'ordre de 25 micro-ampères (guère plus important que la consommation permanente en veille). Si le signal reçu conduit au clignotement ou à l'allumage de la diode luminescente 9, la consommation est de l'ordre de 5 milliampères. Le temps d'allumage est alors limité à 4 ou 5 secondes. On comprend que par l'utilisation d'une batterie de cellules photo-voltaïques qui servent exclusivement à amplifier l'énergie que contient le signal infra-rouge reçu par le capteur 8, on économise la dépense d'énergie fournie par la batterie 13. En effet, en l'absence de cette source d'énergie complémentaire que sont les cellules photo-voltaïques 10, à chaque réception de signal, il faudrait fournir une énergie relativement importante pour réveiller l'oscillateur, cette énergie étant nécessairement tirée de la pile 13.

La disposition de l'invention permet ainsi de répondre au cahier des charge de fonctionnement du dispositif d'étiquetage, à savoir une autonomie sur une période de trois ans, le dispositif répondant par allumage de la diode à raison de trois fois par jour en moyenne.

Le dispositif de l'invention comporte également un moyen de recherche qui sert aussi à personnaliser chaque moyen d'étiquetage. Ce moyen de recherche et de personnalisation des étiquettes est représenté aux figures 4 et 5 dans deux variantes différentes. Il comporte, dans ces deux variantes, un boîtier 15 enfermant une source d'énergie sous forme de pile d'alimentation d'un circuit électronique connu permettant l'émission de signaux infra-rouges codés. Ce boîtier comporte deux types d'émetteurs, l'un 16 disposé sur une face frontale du boîtier pour émettre le signal codé dans l'espace et l'autre 17 tourné vers l'intérieur d'un logement 18 susceptible d'accueillir l'une des extrémités du dispositif d'étiquetage 6. Le boîtier comporte en outre un écran 19 permettant l'affichage des différentes fonctions que l'on assigne au boîtier et/ou des codes composés au moyen d'un clavier à touches alpha-numériques 20. Ce clavier comporte également des touches 21 de sélection du mode de fonctionnement c'est-à-dire essentiellement soit du mode d'émission du signal par l'émetteur 16 frontal soit le mode de personnalisation d'une étiquette et donc d'émission de signal de personnalisation par l'émetteur 17. Le circuit électronique du dispositif 15 peut avantageusement comporter des mémoires de stockage de codes préétablis soit à l'aide du clavier, soit à l'aide d'une installation informatique 22 qui peut être raccordée par un organe de connexion 23 au boîtier 15.

On aura noté que pour personnaliser un dispositif d'étiquetage 6 on a besoin de disposer de l'énergie fournie par les cellules photo-voltaïques 10. Dans le cas de la figure 4, le logement 18 destiné à accueillir l'étiquette comporte une lumière 24 destinée à laisser passer la lumière ambiante au travers de la paroi du boîtier pour permettre l'éclairement des cellules photo-voltaïques lorsque le capteur 8 est mis en regard de l'émetteur 17 du logement 18. Cette fenêtre 24 peut être remplacée par une rampe lumineuse disposée à l'intérieur du logement 18. Dans le cas de la figure 5, le logement 18 est de petite longueur de sorte que seule l'extrémité de l'étiquette portant le récepteur 8 peut y être logée afin d'être en regard de l'émetteur 17. On peut également prévoir un contact électrique 25 à l'intérieur du logement 18 qui vient toucher un plot 26 d'alimentation de l'amplificateur 11 de l'étiquette 6.

En mode de personnalisation, lorsque le code est composé et émis en direction de l'étiquette 6, le programme demande une validation de cet enregistrement. Cette validation verrouille le registre dans lequel le code est mémorisé et engendre au travers du circuit logique 12 de l'étiquette, l'allumage de la diode électro-luminescente 9. Ainsi, l'opérateur est-il averti du succès de la personnalisation. Pour que cette diode 9 soit visible, il faut donc la disposer sur l'étiquette 6 à l'extrémité opposée à celle qui comporte le récepteur de signal infra-rouge 8 de manière que cette diode soit toujours à l'extérieur du logement ménagé dans le boîtier 15 pour accueillir l'étiquette.

Dans le cas de la figure 5, la diode infra-rouge peut cependant être située du même côté que le récepteur 8 mais suffisamment distante de celui-ci pour ne pas être placée dans le logement 18 lors de la personnalisation de l'étiquette.

On aura remarqué, par la fonction de conditionnement de l'étiquette avant sa personnalisation, fonction qui est réalisée par le constructeur avant sa mise sur le marché, que l'utilisateur ne peut pas changer la pile sans mettre l'étiquette hors d'état d'usage. Bien entendu cette fonction, qui est une protection de l'utilisateur lui garantissant la qualité d'une étiquette vierge, peut être supprimée afin de permettre à cet utilisateur de renouveler les piles lorsqu'elles sont déchargées.

L'invention n'est pas limitée au mode de réalisation décrit ci-dessus. En particulier, le logement 18 peut être adapté pour recevoir non seulement les étiquettes représentées, étroites pour dossiers suspendus, mais également les étiquettes réalisées dans d'autres formats pour d'autres objets ou supports (dossiers, boîtes d'archives, étagères ....).

## Revendications

1. Système d'identification, de recherche et de signalisation d'objets (2, 3, 4) lorsqu'ils sont déposés de manière aléatoire dans un espace (1) de rangement, en réponse à un signal de recherche, système composé de moyens (5) d'étiquetage associés à chaque objet et d'un moyen (15) d'interrogation à distance d'au moins un moyen d'étiquetage, chaque moyen d'étiquetage comportant un capteur (8) de signaux infra-rouges, un circuit logique (12) de comparaison du signal capté et d'un signal de référence stocké dans une mémoire émettant en sortie un signal de commande (14) d'un émetteur lumineux (9) lorsque l'identité du signal reçu et du signal de référence est établie, caractérisé en ce que les moyens d'étiquetage comportent deux sources d'alimentation en énergie séparées, l'une constituée par une batterie (13) d'accumulation destinée à l'alimentation d'une partie du circuit (12) incluant la mémoire, le comparateur et l'émetteur lumineux (9), l'autre constituée par au moins une cellule photo-voltaïque (10) d'alimentation d'un étage (11) d'amplification du signal issu du capteur (8).

2. Système selon la revendication 1, caractérisé en ce que le moyen d'interrogation comporte un boîtier (15) pourvu d'un clavier (20, 21) de composition d'un code, et de sélection d'au moins deux modes de fonctionnement, un circuit électronique dont une entrée est le clavier et qui possède au moins un premier émetteur de signaux infra-rouges (16) de recherche et un second émetteur de signaux infra-rouges (17) de personnalisation de chaque moyen d'étiquetage (5).

3. Système selon la revendication 2, caractérisé en ce que l'émetteur (17) de personnalisation est situé à proximité d'un logement (18) ménagé dans le boîtier destiné à recevoir chaque moyen d'étiquetage, l'émetteur (17) étant, lorsque le moyen d'étiquetage est logé dans le logement (18), situé en regard du récepteur (8) qu'il comporte.

4. Système selon la revendication 3, caractérisé en ce que l'émetteur (9) de signal lumineux du moyen d'étiquetage (6) est situé sur le support (7) à un endroit maintenu à l'extérieur du boîtier lorsqu'il est placé dans le logement (18).

5. Système selon la revendication 3 ou la revendication 4, caractérisé en ce que le boîtier (15) comporte au voisinage du logement (18) une source d'éclairement (24) de la cellule (10) du moyen d'étiquetage (6) lorsqu'il est situé dans le logement (18).

6. Système selon la revendication 3 ou la revendication 4, caractérisé en ce que le boîtier (15) comporte un contact électrique (25) au niveau du logement (18) pour l'alimentation d'au moins l'amplificateur (11) de signal situé dans le circuit électronique du moyen d'étiquetage (6) susceptible d'être porté au contact d'un plot (26) appartenant à ce moyen d'étiquetage et lorsque ce dernier est dans le logement (18).

7. Système selon la revendication 1, caractérisé en ce que le moyen d'étiquetage est porté par une carte (7) dont la largeur est de l'ordre de 10 mm.

## Patentansprüche

1. System zur Identifizierung, Suche und Anzeige von in zufälliger Weise in einem Speicherraum (1) angeordneten Gegenständen (2, 3, 4) in Abhängigkeit eines Suchsignals, umfassend eine jedem Gegenstand zugeordnete Etikettiereinrichtung (5) und eine Einrichtung (15) zur Fernabfrage mindestens einer Etikettiereinrichtung, wobei jede Etikettiereinrichtung einen Sensor (8) für Infrarotsignale, eine logische Schaltung (12) zum Vergleichen des empfangenen Signals mit einem in einem Speicher gespeicherten Referenzsignal hat, die am Ausgang ein Steuersignal (14) eines Lichtsenders (9) abgibt, wenn die Identität des empfangenen Signals und des Referenzsignals festgestellt wird, dadurch **gekennzeichnet**, daß die Etikettiereinrichtung zwei getrennte Energiequellen hat, von denen eine eine Akkumulatorbatterie (13) ist, die zur Versorgung eines Teils der den Speicher, den Komparator und den Lichtsender (9) umfassenden Schaltung (12) dient, während die andere von mindestens einer fotovoltischen Zelle (10) zur Versorgung einer Verstärkerstufe (11) gebildet ist, welche das von dem Sensor (8) abgegebene Signal verstärkt.

2. System nach Anspruch 1, dadurch **gekennzeichnet**, daß die Abfrageeinrichtung ein Gehäuse (15) mit einer Tastatur (20, 21) zum Zusammenstellen eines Codes und zum Auswählen mindestens eines von zwei Betriebszuständen und eine elektronische Schaltung hat, deren einer Eingang die Tastatur ist und die mindestens einen ersten Sender (16) für Infrarotsuchsignale und einen zweiten Sender (17) für Infrarotsignale zur Personalisierung jeder Etikettiereinrichtung (5) hat.

3. System nach Anspruch 2, dadurch **gekennzeichnet**, daß der Personalisierungssender (17) nahe einer Aufnahme (18) angeordnet ist, die in dem Gehäuse ausgebildet und zur Aufnahme jeder Etikettiereinrichtung bestimmt ist, wobei der Sender (17) bei in der Aufnahme (18) angeordneter Etikettiereinrichtung dem auf dieser vorgesehenen Sensor (8) gegenüberliegt.

4. System nach Anspruch 3, dadurch **gekennzeichnet,** daß der Lichtsender (9) der Etikettiereinrichtung (6) auf dem Träger (7) an einer Stelle angeordnet ist, die außerhalb des Gehäuses liegt, wenn die Etikettiereinrichtung in der Aufnahme (18) angeordnet ist.

5. System nach Anspruch 3 oder 4, dadurch **gekennzeichnet**, daß das Gehäuse (15) nahe der Aufnahme (18) eine Lichtquelle (24) hat, um die Zelle (10) der Etikettiereinrichtung (6) zu beleuchten, wenn diese sich in der Aufnahme (18) befindet.

6. System nach Anspruch 3 oder 4, dadurch **gekennzeichne**t, daß das Gehäuse (15) auf Höhe der Aufnahme (18) ein elektrisches Kontaktelement (25) zum Versorgen mindestens des in der elektronischen Schaltung der Etikettiereinrichtung (6) vorgesehenen Signalverstärkers (11) hat, wobei das Kontaktelement dazu bestimmt ist, mit einem zur Etikettiereinrichtung gehörenden Kontaktelement (26) in Berührung zu treten, wenn die Etikettiereinrichtung sich in der Aufnahme (18) befindet.

7. System nach Anspruch 1, dadurch **gekennzeichnet,** daß die Etikettiereinrichtung auf einer Karte (7) angeordnet ist, deren Breite in der Größenordnung von 10 mm beträgt.

## Claims

1. A system for identifying, searching for, and pointing out objects (2, 3, 4) in response to a search signal and when the objects are disposed in random manner in a storage space (1), the system comprising labelling means (5) associated with each object, and remote interrogation means (15) for interrogating at least one labelling means, each labelling means including an infrared signal sensor (8), a logic circuit (12) for comparing the sensed signal with a reference signal stored in a memory, and for issuing an output signal (14) for controlling an emitter of light (9) whenever the received signal matches the reference signal, the system being characterized in that the labelling means include two separate energy sources, one being constituted by a storage battery (13) for powering a fraction of the circuit (12) that includes the memory, the comparator, and the light emitter (9), and the other constituted by at least one photovoltaic cell (10) for powering an amplification stage (11) for amplifying the signal delivered by the infrared sensor (8).

2. A system according to claim 1, characterized in that the interrogation means comprises a box (15) provided with a keypad (20, 21) for keying in a code, and for selecting at least two operating modes, an electronic circuit having an input constituted by the keypad and possessing at least a first infrared signal emitter (16) for searching purposes and a second infrared signal emitter (17) for personalizing each labelling means (5).

3. A system according to claim 2, characterized in that the personalization emitter (17) is situated close to a housing (18) formed in the box and designed to receive each labelling means, the emitter (17) being situated facing the receiver (8) of the labelling means whenever the labelling means are received in the housing (18).

4. A system according to claim 3, characterized in that the light signal emitter (9) of the labelling means (6) is situated on the support (7) at a position that is kept outside the box when the labelling means is received in the housing (18).

5. A system according to claim 3 or claim 4, characterized in that the box (15) includes a source of illumination (24) in the vicinity of the housing (18) for illuminating the cell (10) of the labelling means (6) situated in the housing (18).

6. A system according to claim 3 or claim 4, characterized in that the box (15) includes an electrical contact (25) in the housing (18) for powering at least one signal amplifier (11) situated in the electronic circuit of the labelling means (6) and suitable for being brought into contact with a tab (26) belonging to said labelling means when the labelling means is in the housing (18).

7. A system according to claim 1, characterized in that the labelling means is carried on a card (7) having a width of about 10 mm.
